# EUROPÄISCHE PATENTANMELDUNG

(11) **EP 0 622 273 A2**
(43) Veröffentlichungstag der Anmeldung: **02.11.1994**
(21) Anmeldenummer: 94105311.8
(22) Anmeldetag: 06.04.1994
(51) Int. Cl.: B60R 9/045

(54) **Dachreling für Fahrzeuge**

(30) Priorität: 24.04.1993 DE 4313526
(71) Anmelder: Happich Fahrzeug-Dachsysteme GmbH, D-42285 Wuppertal (DE)
(72) Erfinder: Lumpe, Karl-Heinz, D-42279 Wuppertal (DE); Kolodziej, Klaus, D-42327 Wuppertal (DE); Brunner, Harald, D-42659 Solingen (DE)

(57) **Zusammenfassung**

Beschrieben wird eine Dachreling für Fahrzeuge, die aus zwei Holmen (2) und aus diese tragenden Trägefüßen (3) besteht. Dabei ist jeder Holm (2) als Hohlprofil mit einem nach oben offenen Längskanal (4) mit Hinterschneidungen (5) ausgebildet. An jedem Holm (2) sind wahlweise eine im Längskanal (4) lösbar verankerbare, sich über die Holmlänge erstreckende Abdeckprofilleiste (12) oder eine sich über eine erste Teillänge des Holms (2) erstreckende Abdeckprofilleiste (12) und eine sich über die zweite Teillänge erstreckende Trägerprofilleiste (14) angeordnet. Die Anordnung der Trägerprofilleisten (14) ist so getroffen, daß sie in eine die Holme (2) quer miteinander verbindende Gebrauchslage geschwenkt werden können.

## Beschreibung

Die Erfindung bezieht sich auf eine Dachreling für Fahrzeuge, bestehend aus zwei, sich im wesentlichen parallel zueinander entlang der Seitenränder der Dachfläche erstreckenden Holmen und aus die Holme tragenden, sich jeweils auf der Dachfläche abstützenden Tragfüßen.

An den Holmen einer derartigen Dachreling können bei Bedarf üblicherweise Querträger befestigt werden, um Dachlasten zu transportieren. Bei Nichtgebrauch werden die Querträger in der Regel abmontiert und zur Verfügung gehalten, unter Umständen auch im Fahrzeug mitgeführt, was aber zu Platzproblemen führen kann.

Durch die DE 38 14 799 C2 ist eine Anordnung mit einer ein Dach aufweisenden Fahrzeugkarosserie und einer auf dem Dach befestigten, aus zwei sich im wesentlichen in Fahrtrichtung erstreckenden, zumindest annähernd parallel verlaufenden Holmen bestehenden Reling für einen Dachgepäckträger, der von den Holmen und von einzelnen, zwischen den Holmen angeordneten Tragstäben gebildet ist, die bei Nichtgebrauch des Dachgepäckträgers aus ihrer Gebrauchslage entfernbar sind, bekannt geworden. Bei dieser Anordnung ist vorgesehen, daß die Holme Kammern zur Aufnahme der nicht benötigten Tragstäbe aufweisen.

Hierdurch konnte die Aufgabe, die Tragstäbe ohne Platzbeanspruchung im Fahrzeuginnenraum stets mitführen zu können, elegant gelöst werden. Allerdings sind beim Gegenstand der DE 38 14 799 C2 Tragstäbe zwingend an den Holmen anzuordnen, was nicht immer erwünscht ist und zudem ist der Abstand zwischen den Tragstäben nicht variabel.

Der vorliegenden Erfindung liegt nun ausgehend von einer Dachreling der eingangs genannten Art die Aufgabe zugrunde, diese so zu gestalten, daß sie unterschiedlichen Anforderungsproblemen gleichermaßen gerecht wird.

Zur Lösung dieser Aufgabe ist erfindungsgemäß vorgesehen, daß jeder Holm als Hohlprofil mit einem nach oben offenen Längskanal mit Hinterschneidungen ausgebildet ist und wahlweise eine im Längskanal lösbar verankerbare, sich über die Holmlänge erstreckende Abdeckprofilleiste oder eine sich über eine erste Teillänge des Holms erstreckende Abdeckprofilleiste und eine sich über eine zweite Teillänge des Holms erstreckende Trägerprofilleiste trägt, wobei die Trügerprofilleisten beider Holme jeweils nach dem Lösen von an ihren Endbereichen vorgesehenen Verankerungsmitteln aus ihrer sich in Holmrichtung erstreckenden Nichtgebrauchslage in eine die Holme quer miteinander verbindendem Gebrauchslage schwenkbar, längs der Holme verschiebbar und daran durch Wiederanziehen der Verankerungsmittel festlegbar sind.

Die Erfindung ermöglicht es dem Fahrzeugersteller seine Fahrzeuge einheitlich mit einer Dachreling versehen anzubieten, was aus stilistischen Gründen oftmals erwünscht ist. Dabei kann eine erste, preiswerte Version ohne und eine zweite, gegebenenfalls gegen Aufpreis anzubietende Version mit integrierten Trägerprofilleisten ausgerüstet sein. Das optische Erscheinungsbild ist in beiden Fällen nahezu gleich. Entscheidet sich der Käufer für die erste, preiswertere Version, wird ihm vorteilhafterweise nicht die Möglichkeit einer späteren Nachrüstung genommen, weil die Ausbildung der Holme für beide Versionen identisch ist. Die Ausrüstung der erfindungsgemäßen Dachreling mit integrierten Trägerprofilleisten bietet zunächst den Vorteil, daß dieselben ohne Platzbeanspruchung stets mitgeführt werden können, und zwar in einer optisch äußerst ansprechenden Weise. Ein weiterer Vorteil ist die schnell und einfach durchzuführende Montage bei der Überführung der Trägerprofilleisten aus der Nichtgebrauchslage in die Gebrauchslage oder umgekehrt. Ferner ist von besonderem Vorteil die Möglichkeit, den Abstand der Trägerprofilleisten über die Länge der Holme stufenlos verstellen zu können.

Vorteilhafte Ausgestaltungen und zweckmäßige Weiterbildungen der Erfindung sind in den Unteransprüchen angegeben.

Ein Ausführungsbeispiel der Erfindung wird im folgenden anhand der Zeichnung näher erläutert; Es zeigen:
Fig. 1 eine Dachrelinganordnung auf einem Fahrzeugdach mit Trägerprofilleisten in der Nichtgebrauchslage,
Fig. 2 die Dachrelinganordnung nach Fig. 1 mit Trägerprofilleisten in der Gebrauchslage,
Fig. 3 einen Schnitt, etwa folgend der Linie III - III in Fig. 1,
Fig. 4 einen Schnitt, etwa folgend der Linie IV - IV in Fig. 1,
Fig. 5 den Endbereich eines Holms der Dachreling,

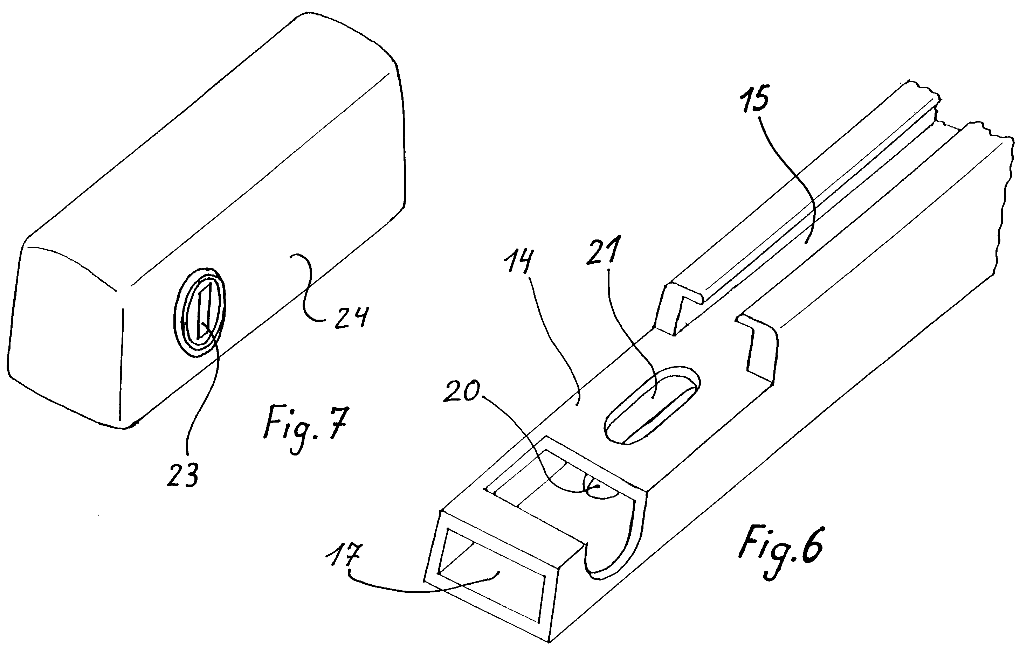

Fig. 6 den Endbereich einer Trägerprofilleiste der Dachreling und
Fig. 7 eine Endkappe zur Anordnung an der Trägerprofilleiste.

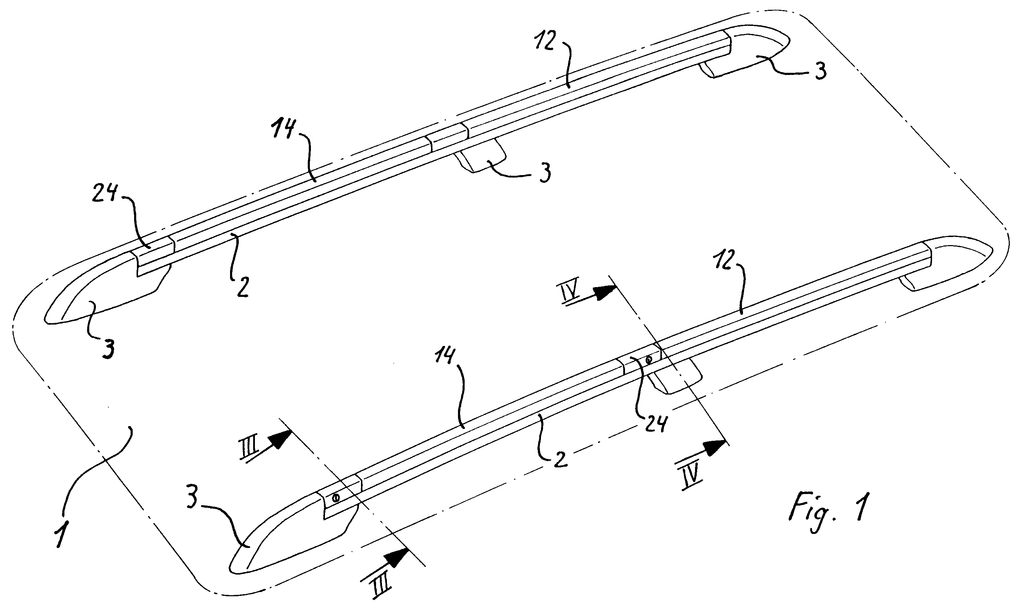

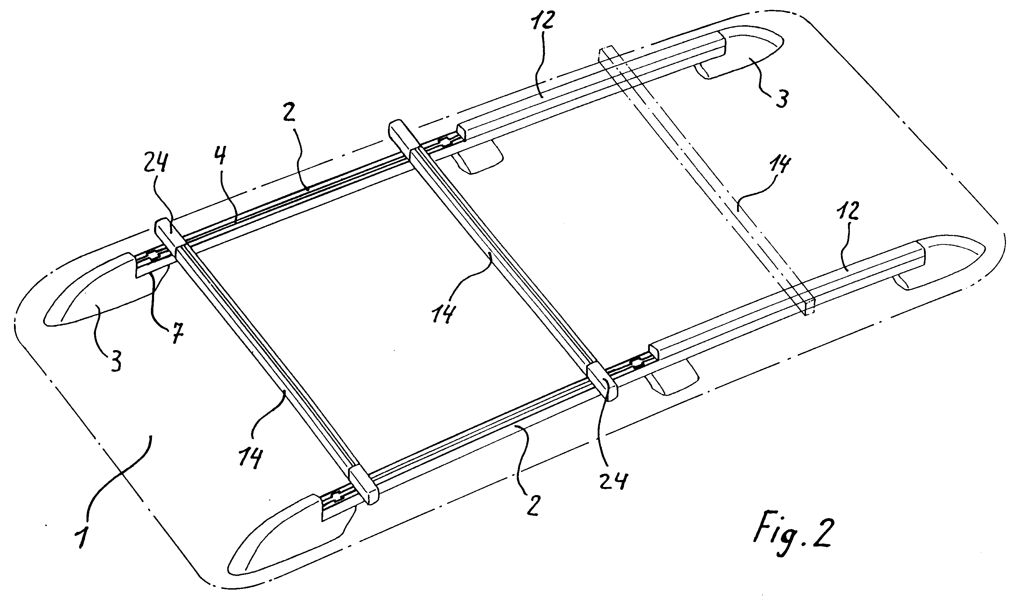

In Fig. 1 und 2 ist mit jeweils einer strichpunktierten Linie ein Fahrzeugdach 1 angedeutet, auf dem zwei Holme 2 zumindest annähernd parallel zueinander entlang der Seitenränder der Dachfläche verlaufend angeordnet sind. Zur von der Dachfläche beabstandeten Abstützung der Holme 2 dienen Tragfüße 3, die einerseits am Fahrzeugdach 1 und andererseits an den Holmen 2 festgelegt sind.

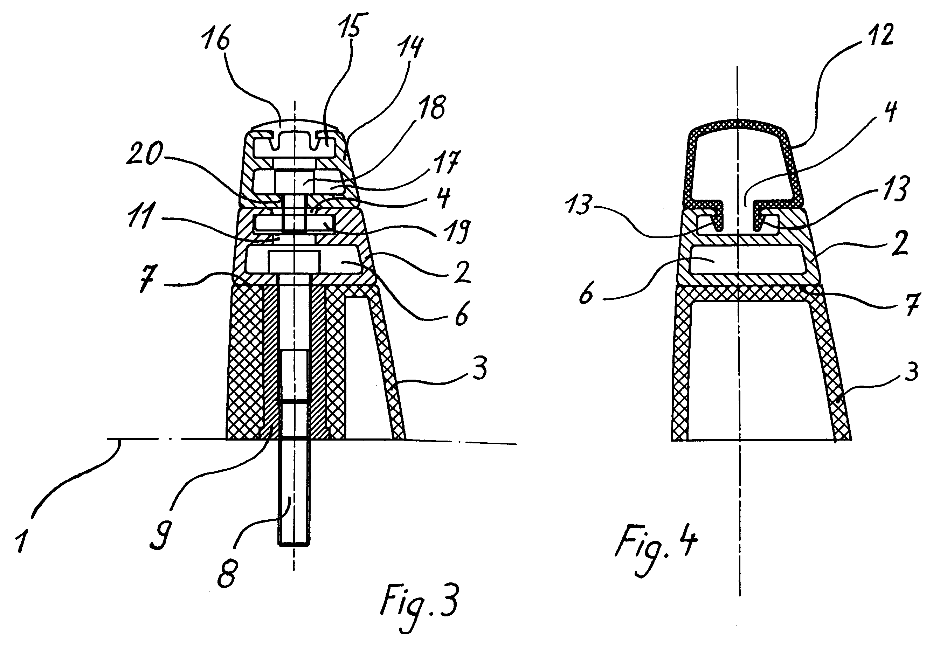

Jeder Holm 2 ist als Hohlprofil mit einem nach oben offenen Längskanal 4 mit Hinterschneidungen 5 ausgebildet. Jeder Holm 2 weist zudem einen im wesentlichen geschlossenen Längskanal 6 auf, der der Material- und Gewichtseinsparung dient. Die Holme 2, die im allgemeinen als aus Leichtmetall bestehende Strangpreßprofile auszuführen sind, liegen mit ihren Endbereichen und, was insbesondere für eine relativ lange Dachreling gilt, mit ihren mittigen Bereichen jeweils auf einer an den Tragfüßen 3 ausgebildeten Stützfläche 7 auf. Die endseitigen Tragfüße sind stufenförmig abgesetzt, so daß die Holme 2 auch jeweils eine stirnseitige Abstützung an den Tragfüßen 3 finden. Die Holme 2 sind an den Tragfüßen 3, wie in Fig. 3 gezeigt, jeweils mittels einer Schraube 8 festlegbar, wozu die Tragfüße 3 mit einer eingepreßten Gewindehülse 9 ausgestattet sind. Zur Montage wird die Schraube 8 durch einen in jedem Holm 2 vorgesehenen Längsschlitz 10 geführt und mittels eines, eine Bohrung 11 im Holm 2 durchsetzenden Schraubwerkzeugs in die Gewindehülse 9 eingedreht. Der Kopf der Schraube 8 stützt sich dabei auf der unteren Wandung des Längskanals 6 ab. Das aus dem Tragfuß 3 herausragende freie Ende jeder Schraube 8 durchsetzt eine Lochung im Fahrzeugdach sowie einer sich darunter befindlichen Tragstruktur (nicht gezeigt) und dient zur Aufnahme einer Befestigungsmutter.

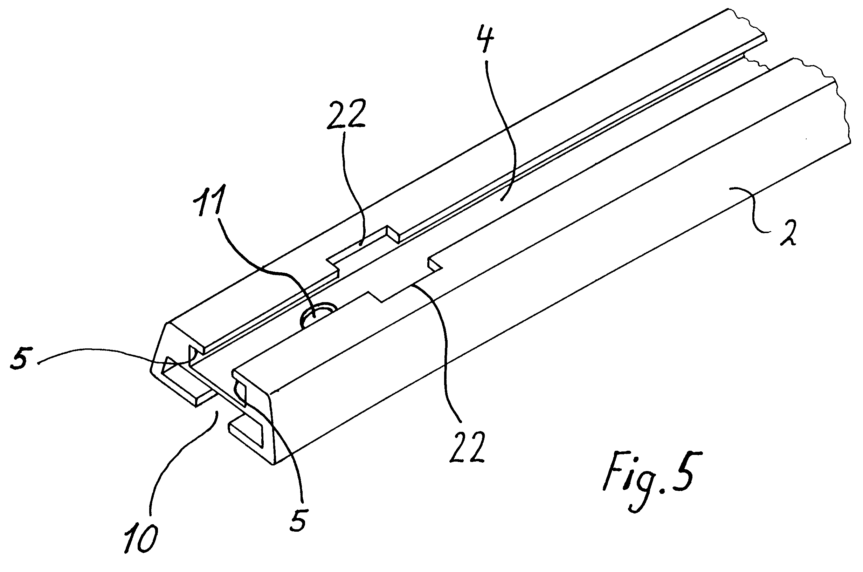

Eine aus Holm 2 und Tragfüßen 3 bestehende Dachreling kann vervollkommnet werden, und zwar z. B. dadurch, daß eine Abdeckprofilleiste 12 an dem Holm 2, sich über dessen Länge erstreckend angebracht wird. Die Abdeckprofilleiste 12 kann dabei ein extrudiertes Hohlkammerprofil aus Kunststoff oder Gummi mit einstückig daran angeformten Rastnasen 13 sein, die in den Längskanal 4 einschnappen und hinter den Hinterschneidungen 5 verrasten. Es versteht sich, daß eine solche, besonders in Fig. 4 gezeigte Abdeckprofilleiste 12 einfach und kostengünstig herzustellen, leicht zu montieren und zu demontieren ist und der Dachreling ein gefälliges Äußeres verleiht.

Insbesondere kann aber eine Dachreling dadurch vervollkommnet werden, daß eine Abdeckprofilleiste 12 sich, wie in Fig. 1 und 2 gezeigt, nur über eine Teillänge des Holms 2 erstreckt, während die verbleibende Teillänge mit einer Trägerprofilleiste 14 abgedeckt wird. Diese bevorzugt als metallisches Strangpreßteil ausgeführte Trägerprofilleiste 14 ist jeweils am zugehörigen Holm 2 so befestigt, daß sie sich wahlweise in Holmlängsrichtung (Fig. 1) oder -querrichtung (Fig. 2) erstreckt, wobei sie im letzteren Falle eine Querverbindung zwischen den beiden auf dem Fahrzeugdach 1 angeordneten Holmen 2 herstellt. Fig. 2 zeigt demnach die Anordnung der Trägerprofilleisten 14 in der zur Aufnahme von Dachlasten bestimmten Gebrauchsstellung.

Jede Trägerprofilleiste 14 ist, vergleichbar mit den Holmen 2, als Hohlprofil mit einem nach oben offenen Längskanal 15 mit Hinterscheidungen zur Aufnahme von Anbauteilen, wie Fahrradhalterung, Surfbretthalterung oder dgl. oder - bei Nichtgebrauch - zum Einklippsen einer Abdeckprofilleiste 16 ausgebildet. Jede Trägerprofilleiste 14 besitzt auch einen zweiten, mehr der Material- und Gewichtseinsparung dienenden Längskanal 17.

Zur Befestigung der Trägerleisten 14 an den Holmen 2 dienen einerseits an den Trägerleisten 14 abgestützte Schrauben 18 und andererseits an den Holmen 2 abgestützte Nutensteine oder Klemmstücke 19. Die Köpfe der Schrauben 18 stützten sich jeweils auf der unteren Wandung des Längskanals 17 ab und durchsetzen in dieser Wandung ein Langloch 20. Von oben her sind die Schrauben 18 durch ein Langloch 21 zugänglich, das die untere Wandung des Längskanals 15 aufweist. Zur Befestigung einer Trägerprofilleiste 14 sind also lediglich die Schrauben 18, die jeweils in eine Gewindebohrung der Klemmstücke 19 eingreifen, anzuziehen, wodurch die Klemmstücke 19 gegen die Hinterschneidungen des Längskanals 15 herangezogen werden.

Sollen nun die Trägerprofilleisten 14 aus ihrer Nichtgebrauchslage in die Gebrauchslage nach Fig. 2 geschwenkt werden, ist zunächst ein Lösen der Schrauben 18 erforderlich. Das dem zu verschwenkende Ende einer jeden Trägerprofilleiste 14 benachbarte Klemmstück 19 kann sodann längs des Kanals 4 verschoben und hiernach durch Erweiterungsöffnungen 22 des Längskanals 4 herausbewegt und durch entsprechende Erweiterungsöffnungen im Längskanal 4 des jeweils gegenüberliegenden Holms wieder eingeführt werden. Nach Ausrichtung und Anziehen der Schrauben 18 ist für die Trägerprofilleisten 14 eine unbedingt zuverlässige und stabile Gebrauchslage gegeben. Dabei besteht noch ein besonderer Vorteil darin, daß die Trägerprofilleisten 14 über die gesamte Länge der Holme 2 stufenlos verstellbar und in jeder gewünschten Abstandslage zueinander an den Holmen 2 festlegbar sind, so daß besonders kurze oder besonders lange Dachlasten auf den Trägerprofilleisten 14 anordbar sind. Sollten die Trägerprofilleisten 14 besonders weit voneinander an den Holmen, wie in Fig. 2 mit strichpunktierten Linien angedeutet, angeordnet werden, ist natürlich ein vorübergehendes Entfernen der Abdeckprofilleisten 12 erforderlich.

Als Diebstahlsicherung für die Trägerprofilleisten 14 und für die daran gegebenenfalls angeordneten Anbauteile dienen jeweils mit einem Schloß 23 ausgerüstete Endkappen 24, die an jedem Trägerprofilleistenendbereich in an sich bekannter Weise angeordnet sind.

## Patentansprüche

1. Dachreling für Fahrzeuge, bestehend aus zwei, sich im wesentlichen parallel zueinander entlang der Seitenränder der Dachfläche erstreckenden Holmen (2) und aus die Holme (2) tragenden, sich jeweils auf der Dachfläche abstutzenden Tragfüßen (3), dadurch gekennzeichnet, daß jeder Holm (2) als Hohlprofil mit einem nach oben offenen Längskanal (4) mit Hinterschneidungen (5) ausgebildet ist und wahlweise eine im Längskanal (4) lösbar verankerbare, sich über die Holmlänge erstreckende Abdeckprofilleiste (12) oder eine sich über eine erste Teillänge des Holms (2) erstreckende Abdeckprofilleiste (12) und eine sich über eine zweite Teillänge des Holms (2) erstreckende Trägerprofilleiste (14) trägt, wobei die Trägerprofilleisten (14) beider Holme (2) jeweils nach dem Lösen von an ihren Endbereichen vorgesehenen Verankerungsmitteln aus ihrer sich in Holmrichtung erstreckenden Nichtgebrauchslage in eine die Holme (2) quer miteinander verbindenden Gebrauchslage schwenkbar, längs der Holme (2) verschiebbar und daran durch Wiederanziehen der Verankerungsmittel festlegbar sind.

2. Dachreling nach Anspruch 1, dadurch gekennzeichnet, daß zur Verankerung der Trägerprofilleisten (14) jeweils in den Längskanälen (4) der Holme (2) verschiebbar aufgenommene Klemmstücke (19), die jeweils eine mit Innengewinde versehene Bohrung aufweisen und darin eindrehbare Kopfschrauben (18) dienen, die mit ihrem Gewindeschaft in den Trägerprofilleisten (14) vorgesehene Löcher durchsetzen.

3. Dachreling nach Anspruch 2, dadurch gekennzeichnet, daß die Löcher in den Trägerprofilleisten als Langlöcher (20, 21) ausgeführt sind.

4. Dachreling nach mindestens einem der Ansprüche 1 bis 3, dadurch gekennzeichnet, daß jeder Längskanal (4) Erweiterungsöffnungen (22) zum Einsetzen oder Herausziehen der Klemmstücke (19) aufweist.

5. Dachreling nach mindestens einem der Ansprüche 1 bis 4, dadurch gekennzeichnet, daß jede Trägerprofilleiste (14) als Hohlprofil mit einem nach oben offenen Längskanal (15) mit Hinterschneidungen zur wahlweisen Aufnahme von Anbauteilen oder einer Abdeckprofilleiste (16) ausgebildet ist und an den Endbereichen angeordnete, jeweils mit einem Schloß (23) ausgerüstete Endkappen (24) trägt, die als Diebstahlsicherung jeweils die Schraube (28) sowie den Längskanal (15) stirnseitig abdeckt.
